# EUROPÄISCHE PATENTSCHRIFT

(11) **EP 1 028 509 B1**
(45) Veröffentlichungstag und Bekanntmachung des Hinweises auf die Patenterteilung: **20.10.2004**
(21) Anmeldenummer: 99108037.5
(22) Anmeldetag: 23.04.1999
(51) Int. Cl.: H02G 11/00

(54) **Arbeitsplatz-Versorgungsvorrichtung**
Supplying device on working place
Dispositif d'alimentation sur un lieu de travail

(30) Priorität: 09.02.1999 DE 19905336
(43) Veröffentlichungstag der Anmeldung: 16.08.2000
(73) Patentinhaber: Wampfler Aktiengesellschaft, 79576 Weil am Rhein-Maerkt (DE)
(72) Erfinder: Manthei, Uwe, 79589 Binzen (DE)
(74) Vertreter: Rapp, Bertram, Dr.

(56) Entgegenhaltungen:
- DE-U- 29 520 491
- DE-U- 29 802 278
- FR-A- 1 345 760
- US-A- 5 692 984
- JENSEN S: "AUTOMATING FINE PITCH DEVICE HANDLING" ELECTRONIC PACKAGING AND PRODUCTION,US,CAHNERS PUBLISHING CO, NEWTON, MASSACHUSETTS, Bd. 37, Nr. 12, 1. September 1997 (1997-09-01), Seiten 97-98,100, XP000725968 ISSN: 0013-4945

## Beschreibung

Die Erfindung betrifft ein Arbeitsplatz-Versorgungsmodul nach dem Oberbegriff des Anspruchs 1 sowie eine Arbeitsplatz-Versorgungsvorrichtung welche mehrere solcher Module umfaßt.

Es sind Arbeitsplatz-Versorgungsvorrichtungen bekannt, welche eine Schiene und einen darin geführten, längsverschiebbaren Schlitten aufweisen, wobei die Schiene in der Regel Montageelemente aufweist, mit der sie entweder an der Decke oder Trägern befestigbar ist. Die Schiene weist einen im wesentlichen C-förmigen Querschnitt auf, wobei die Unterseite der Schiene längs der Schiene geschlitzt ist. Der Schlitten ist innerhalb der Schiene geführt und weist hierzu in der Regel zwei Fahrwerke auf, die auf der Innenseite der Unterseite der Schiene abrollen können. Von jedem dieser Fahrwerke ragt ein Träger nach unten aus dem Schlitz der Schiene heraus und an diesen Trägem ist der eigentliche Schlitten abgehängt. Somit ist der Schlitten längs der Schiene verfahrbar. Innerhalb der Schiene befinden sich eine oder mehrere Elektroleitungen, welche als Starkstrom- oder Schwachstromleitungen ausgebildet sein können und auch Leitungen zur Datenübertragung umfassen können. Die Elektroleitungen werden an einem Zuführungspunkt in das Innere der Schiene eingeführt, jedoch dem Schlitten nicht unmittelbar zugeführt, da ein Verschieben des Schlittens zu einem Knicken der Versorgungsleitungen führen würde. Die Elektroleitungen verlaufen daher mindestens in einem Teilbereich der Schiene innerhalb einer flexiblen Energiekette. Ein Ende dieser flexiblen Energiekette ist bezüglich der Schiene fixiert und das andere Ende ist an dem Schlitten bzw. an einem Fahrwerk des Schlittens fixiert. Die flexible Energiekette, auch als Leitungsraupe bekannt, weist ein oberes Kettentrum und ein unteres Kettentrum auf, welche parallel zueinander verlaufen, wobei das obere Kettentrum nahe der Oberseite der Schiene und das untere Kettentrum nahe der Unterseite der Schiene verläuft und auf dieser Unterseite aufliegt. Der Übergang vom oberen zum unteren Kettentrum wird durch eine 180°-Biegung der Kette vermittelt. Die offenen Enden der Kette sind innerhalb der Schiene fixiert bzw. am Schlitten.

Die der Innenseite der Schiene zugeführten Versorgungsleitungen verlaufen zunächst ohne weitere Führung in der Schiene und können in dieser zusätzlich gesichert werden. Sie treten dann in die flexible Energiekette ein und durchlaufen zunächst deren oberes Kettentrum, dann die 180°-Biegung und sodann das untere Kettentrum, welches an dem Fahrwerk des Schlittens endet. Sodann werden die Leitungen dem aus dem der Schiene herausstehenden eigentlichen Schlitten zugeführt, wo Steckdosen oder andere Abnahmevorrichtungen vorhanden sind.

Bei derartigen Arbeitsplatz-Versorgungsvorrichtungen ist von Nachteil, daß nur Elektroleitungen darin führbar sind und weitere Versorgungsvorrichtungen für andere Energieträger oder Rohstoffe vorzusehen sind.

Es besteht daher die Aufgabe, ein Arbeitsplatz-Versorgungsmodul so weiterzubilden, daß eine einfachere und kompaktere Versorgung des Arbeitsplatzes gewährleistet ist.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel der Erfindung wird im folgenden unter Bezugnahme auf die begleitenden Zeichnungen näher erläutert. Diese zeigen:
- **Fig. 1**: einen Längsschnitt durch ein erfindungsgemäßes Arbeitsplatz-Versorgungsmodul.
- **Fig. 2**: einen Querschnitt durch das in Figur 1 dargestellte Versorgungsmodul im Bereich der flexiblen Energiekette.
- **Fig. 3**: einen Querschnitt durch das in Figur 1 dargestellte Versorgungsmodul im Bereich der Entnahmeabzweigung.
- **Fig. 4**: einen Längsschnitt durch eine erfindungsgemäße Arbeitsplatz-Versorgungsvorrichtung, welche drei Versorgungsmodule von Fig. 1 umfaßt.

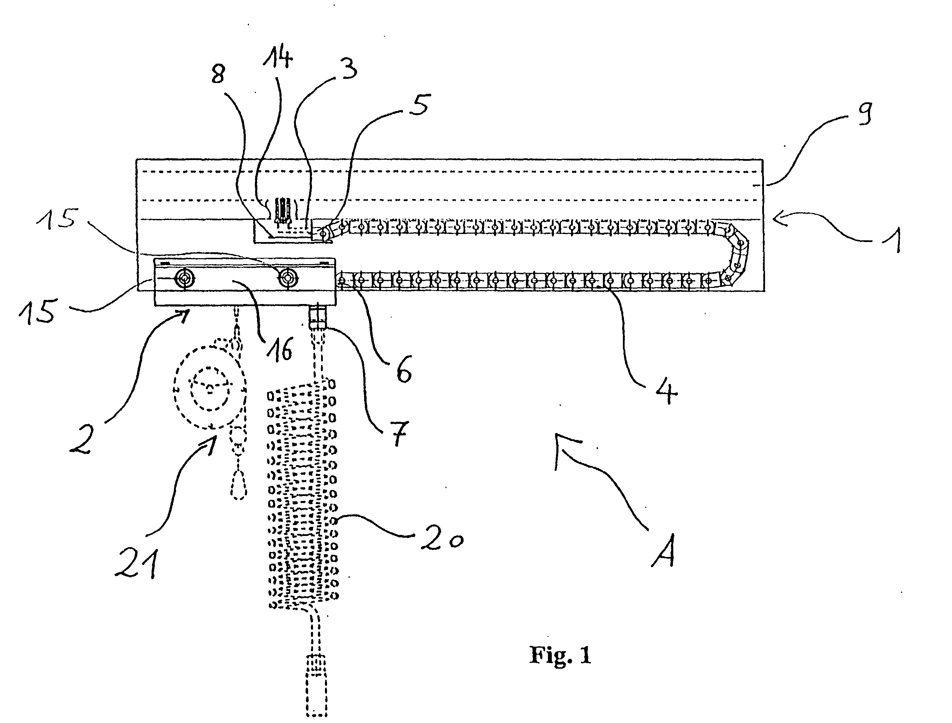

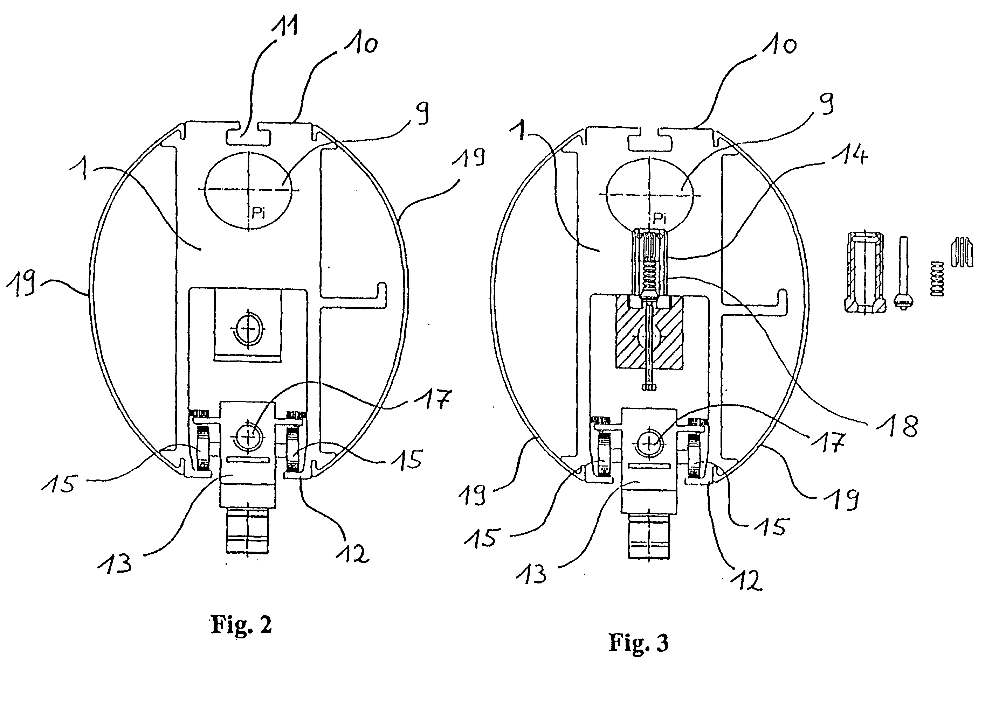

Das in den Figuren 1 bis 3 dargestellte Arbeitsplatz-Versorgungsmodul weist eine Schiene 1 auf, welche ein im wesentlichen C-förmiges Profil hat. Dies ist am deutlichsten aus den Figuren 2 und 3 ersichtlich. Die Schiene 1 weist eine Oberseite 10 und eine Unterseite 12 sowie zwei Außenseiten auf, wobei die Unterseite 12 einen längs der Schiene 1 verlaufenden Schlitz aufweist. Die Schiene 1 weist an ihrer Oberseite einen in Längsrichtung verlaufenden Schlitz auf, welcher in eine an der Decke eines Raumes oder an einem Gestell angebrachten Halteschiene einschiebbar ist. An der rechten und linken Außenseite der Schiene 1 sind jeweils zylindersegmentförmige Abdeckungen angebracht, so daß zwischen der Innenseite der Abdeckung 19 und der Außenseite der Schiene 1 ein Hohlraum entsteht.

Innerhalb der Schienen 1 befindet sich eine flexible Energiekette 4, was am besten aus Figur 1 ersichtlich ist. Das eine Ende 5 dieser flexiblen Energiekette 4 ist innerhalb der Schiene 1 fixiert. Hiervon ausgehend verläuft das obere Kettentrum der flexiblen Energiekette 4 entlang der inneren Oberseite 10 der Schiene 1. Daran schließt sich eine 180°-Biegung der flexiblen Energiekette 4 an und daran anschließend verläuft das untere Kettentrum der Energiekette entlang der inneren Unterseite 12 der Schiene 1 parallel zum oberen Kettentrum zurück bis zum anderen Ende 6 der Energiekette 4.

Die Energiekette 4 ist an sich bekannt und besteht vorzugsweise aus einzelnen Plastikgliedern, welche gelenkig miteinander verbunden sind und einen inneren Kanal zur Durchführung von Leitungen bilden.

Innerhalb der Schiene 1 ist ein Schlitten 2 über zwei Fahrwerke 13 verfahrbar. Die beiden Fahrwerke 13 befinden sich im Inneren der Schiene 1 und weisen jeweils zwei koaxiale Rollen 15 auf, die auf der inneren Unterseite 12 der Schiene 1, und zwar links und rechts von deren Längsschlitz, abrollen.

Die Fahrwerke 13 weisen jeweils einen Träger auf, der durch den Schlitz der Schiene 1 nach unten verläuft. Beide Träger lagern gemeinsam den eigentlichen Schlitten 2. Bei dem eigentlichen Schlitten 2 handelt es sich im wesentlichen um ein Verbindungsstück 16, welches zwischen den beiden Trägem verläuft und an welchem die Entnahmevorrichtungen angeordnet sind, zu denen die Versorgungsleitungen führen.

Die Versorgungsleitungen setzen sich im dargestellten Ausführungsbeispiel aus einer Druckluftleitung 3 und einer Elektroleitung 8 zusammen und werden innerhalb der flexiblen Energiekette geführt. Die Elektroleitung 8 verläuft innerhalb des Hohlraums der sich zwischen der Innenseite der Abdeckung 19 und der Außenseite der Schiene bildet und wird dem Inneren der Schiene 1 an einer nicht dargestellten Stelle zugeführt. Innerhalb der Schiene verläuft die Elektroleitung 8 frei bzw. am inneren Rand der Schiene 1 angebracht (links in Figur 1), bis sie an der schienenfesten Fixierung der flexiblen Energiekette (bei Bezugszahl 5) in die flexible Energiekette 4 eintritt.

Innerhalb der Schiene verläuft oberhalb der Energiekette 4 in Längsrichtung ein durchgehender Druckluftkanal 9. Der Druckluftkanal 9 ist als Bohrung im Rohmaterial der Schiene 1 ausgebildet. Ausgehend von einer Entnahmeabzweigung 14 des Druckluftkanals 9 wird die Druckluftleitung 3 der schienenfesten Fixierung der flexiblen Energiekette (bei Bezugszahl 5) zugeführt, wo sie in die flexible Energiekette 4 eintritt. Von dort (hier nicht mehr zeichnerisch dargestellt) verlaufen die Elektroleitung 8 und die Druckluftleitung 3 nebeneinander in der Energiekette 4 durch deren oberes Kettentrum, die Biegung und deren unteres Kettentrum bis zum Fahrwerk 13. Der Träger dieses Fahrwerks weist innenseitige Durchgangsbohrungen 17 auf, durch welche die Versorgungsleitungen 3 bzw. 8 verlaufen, und zwar bis zu den Entnahmevorrichtungen, wobei lediglich ein Druckluftentnahmeanschluß 7 vorgesehen ist, an welchem ein Druckluft-Spiralschlauch 20 angebracht werden kann. Für die Elektroleitungen 8 sind beispielsweise Steckdosen vorgesehen. Zum Ausgleich von evtl. auftretenden Drehmomenten ist ein Balancer 21 vorgesehen.

In einem weiteren, hier nicht dargestellten Ausführungsbeispiel, kann der durchgehende Druckluftkanal 9 auch unterhalb oder neben der Energiekette 4 in Längsrichtung verlaufen. Ein weiteres, nicht dargestelltes Ausführungsbeispiel sieht vor, daß der Druckluftkanal von einem Rohr gebildet ist, welches in Längsrichtung oder auch in Querrichtung verläuft.

Erfindungsgemäß ist es möglich, daß sowohl eine oder mehrere Druckluftversorgungsleitungen 3 als auch eine oder mehrere Elektroleitungen 8 sowie weitere Versorgungsleitungen, beispielsweise Gas- oder Flüssigkeitsversorgungsleitungen dem an der Schiene 1 verschiebbaren Schlitten 2 zugeführt werden. Zur Überprüfung des Zustands der Versorgungsleitungen sind am Schlitten 2 oder im Bereich der Entnahmeabzweigungen 14 Meßgeräte, wie z.B. Druckluftmanometer, oder Durchflußmeßgeräte vorgesehen.

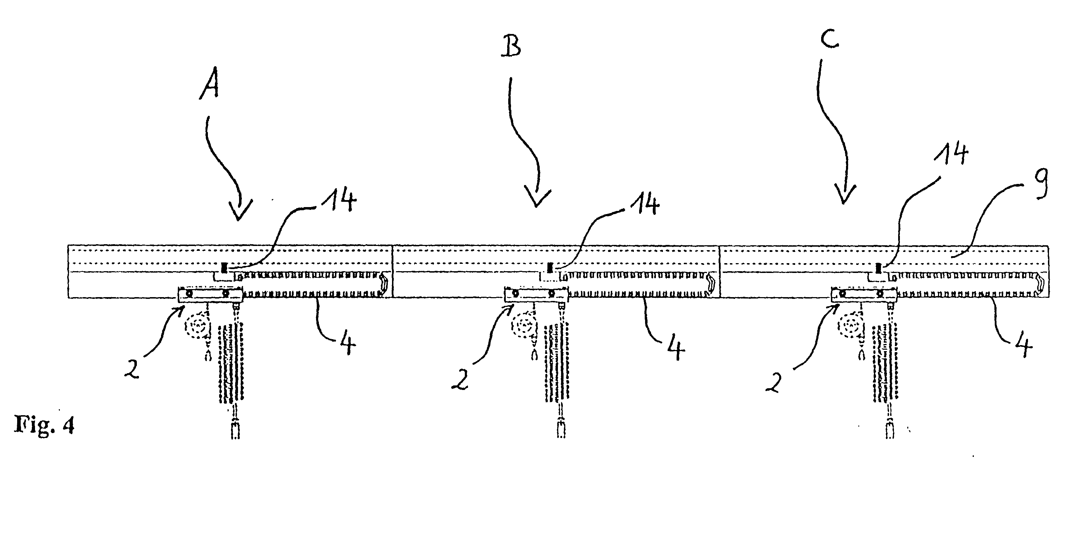

Gemäß der Erfindung können, wie in Figur 4 gezeigt, mehrere solcher Arbeitsplatzvesorgungsmodule A, B, C der oben beschriebenen Art entlang ihrer Längsrichtung aneinandergereiht werden, derart, daß sie einen gemeinsamen durchgehenden Druckluftkanal 9 bilden, von welchem die einzelnen Versorgungsmodule mit Druckluft versorgt werden. Die Druckluftentnahme aus dem Druckluftkanal 9 erfolgt vorzugsweise über ein in den Entnahmeabzweigungen 14 angebrachtes Rückschlagventil 18.

Mit einer derartigen Arbeitsplatz-Versorgungsvorrichtung erübrigt es sich, daß weitere Versorgungsvorrichtungen am Arbeitsplatz zur Verfügung stehen, beispielsweise Druckluft- und Flüssigkeitsflaschen. Sowohl elektrische Energie als auch Daten als auch Druckluft und Gas- und Flüssigkeitsversorgung sind zentral über die Arbeitsplatz-Versorgungsvorrichtung zuführbar.

## Patentansprüche

1. Arbeitsplatz-Versorgungsmodul (A) mit einer Schiene (1) und einem daran geführten, längs der Vorrichtung verschiebbaren Schlitten (2) sowie mit mindestens einer Versorgungsleitung (3, 8), welche in einer innerhalb der Schiene (1) angeordneten flexiblen Energiekette (4) geführt ist, wobei ein Ende (5) der flexiblen Energiekette (4) bezüglich der Schiene (1) fixiert und das andere Ende (6) am Schlitten (2) befestigt ist, **dadurch gekennzeichnet, daß** die mindestens eine Versorgungsleitung (3, 8) eine Druckluftleitung (3) ist, am Schlitten (2) ein Druckluftentnahmeanschluß (7) vorgesehen ist und das Modul (A) in seiner Längsrichtung einen durchgehenden Druckluftkanal (9) aufweist, der über eine Entnahmeabzweigung (14) mit dem schienenfesten Ende der Druckluftleitung (3) verbunden ist.

2. Arbeitsplatz-Versorgungsmodul nach Anspruch 1, **dadurch gekennzeichnet, daß** der Druckluftkanal (9) mehrere Entnahmeabzweigungen (14) aufweist, welche jeweils mit weiteren Druckluftleitungen verbindbar sind.

3. Arbeitsplatz-Versorgungsmodul nach einem der voranstehenden Ansprüche, **dadurch gekennzeichnet, daß** die Entnahmeabzweigungen (14) jeweils ein Rückschlagventil (18) umfassen.

4. Arbeitsplatz-Versorgungsmodul nach einem der voranstehenden Ansprüche, **dadurch gekennzeichnet, daß** die Versorgungsleitungen (3, 8) Elektroleitungen (8) umfassen.

5. Arbeitsplatz-Versorgungsmodul nach einem der voranstehenden Ansprüche, **dadurch gekennzeichnet, daß** die Versorgungsleitungen (3, 8) Flüssigkeitsversorgungsleitungen umfassen.

6. Arbeitsplatz-Versorgungsmodul nach einem der voranstehenden Ansprüche, **dadurch gekennzeichnet, daß** die Versorgungsleitungen (3, 8) Gasversorgungsleitungen umfassen.

7. Arbeitsplatz-Versorgungsmodul nach einem der voranstehenden Ansprüche, **dadurch gekennzeichnet, daß** der Schlitten (2) ein Druckluftmanometer aufweist.

8. Arbeitsplatz-Versorgungsmodul nach einem der voranstehenden Ansprüche, **dadurch gekennzeichnet, daß** am Schlitten (2) oder an den Entnahmeabzweigungen (14) ein Durchflußmeßgerät vorgesehen ist.

9. Arbeitsplatz-Versorgungsmodul nach einem der voranstehenden Ansprüche, **dadurch gekennzeichnet, daß** die Schiene (1) an ihrer Oberseite (10) Befestigungsvorrichtungen (11) zur Montage der Schiene (1) aufweist.

10. Arbeitsplatz-Versorgungsmodul nach einem der voranstehenden Ansprüche **dadurch gekennzeichnet, daß** die Schiene (1) ein im wesentlichen C-förmiges und an der Unterseite (12) der Schiene (1) offenes Profil aufweist und der Schlitten (2) mindestens ein Fahrwerk (13) aufweist, welches auf der inneren Unterseite (12) der Schiene (1) abrollt und an dem der Schlitten (2) aufgehängt ist.

11. Arbeitsplatz-Versorgungsvorrichtung zusammengesetzt aus einer Vielzahl von Arbeitsplatz-Versorgungsmodulen (A, B, C) nach einem der voranstehenden Ansprüche, **dadurch gekennzeichnet, daß** die einzelnen Module (A, B, C) längs hintereinander angeordnet sind, um einen einzigen durchgehenden Druckluftkanal (9) zu bilden.

## Claims

1. Work place supply module (A) with a rail (1) and a carriage (2) which is guided on it and displaceable along the device, and with at least one supply line (3, 8) which is guided in a flexible energy chain (4) arranged inside the rail (1), with one end (5) of the flexible energy chain (4) fixed in relation to the rail (1) and the other end (6) fastened to the carriage (2), **characterised in that** the at least one supply line (3, 8) is a compressed air line (3), **in that** a compressed air extraction connection (7) is provided on the carriage (2), and **in that** in its longitudinal direction the module (A) exhibits a continuous compressed air channel (9) which is connected through an extraction branch (14) to the end of the compressed air line (3) fixed to the rail.

2. Work place supply module according to claim 1, **characterised in that** the compressed air channel (9) exhibits a plurality of extraction branches (14) each of which can be connected with further compressed air lines.

3. Work place supply module according to one of the preceding claims, **characterised in that** the extraction branches (14) each comprise a non-return valve (18).

4. Work place supply module according to one of the preceding claims, **characterised in that** the supply lines (3, 8) comprise electrical leads (8).

5. Work place supply module according to one of the preceding claims, **characterised in that** the supply lines (3, 8) comprise liquid supply lines.

6. Work place supply module according to one of the preceding claims, **characterised in that** the supply lines (3, 8) comprise gas supply lines.

7. Work place supply module according to one of the preceding claims, **characterised in that** the carriage (2) exhibits a compressed air pressure gauge.

8. Work place supply module according to one of the preceding claims, **characterised in that** a flow meter is provided on the carriage (2) or on the extraction branches (14).

9. Work place supply module according to one of the preceding claims, **characterised in that** on its upper side (10) the rail (1) exhibits fastening devices (11) for mounting of the rail (1).

10. Work place supply module according to one of the preceding claims, **characterised in that** the rail (1) exhibits an essentially C-shaped profile which is open on the underside (12) of the rail (1), and **in that** the carriage (2) exhibits at least one set of running gear (13) which rolls on the inner underside (12) of the rail (1) and on which the carriage (2) is suspended.

11. Work place supply device, composed of a plurality of work place supply modules (A, B, C) according to one of the preceding claims, **characterised in that** the individual modules (A, B, C) are arranged longitudinally one behind the other in order to form a single continuous compressed air channel (9).

## Revendications

1. Module d'alimentation sur un lieu de travail (A) muni d'un rail (1) et d'un chariot (2) déplaçable le long du dispositif, guidé sur celui-ci, ainsi qu'au moins une conduite d'alimentation (3, 8), laquelle est reliée à une chaîne porte-câbles (4) disposée à l'intérieur du rail (1), dans lequel une extrémité (5) de la chaîne porte-câbles (4) est fixée par rapport au rail (1) et l'autre extrémité (6) est fixée sur le chariot (2), **caractérisé en ce qu'**au moins une conduite d'alimentation (3, 8) est une conduite d'air comprimé (3), **en ce qu'**un raccordement pour le prélèvement d'air comprimé (7) est prévu sur le chariot (2) et **en ce que** le module (A) comporte un conduit d'air comprimé (9) continu dans le sens de la longueur, qui est relié à l'extrémité de la conduite d'air comprimé (3) fixée au rail par une embouchure de prélèvement (14).

2. Module d'alimentation sur un lieu de travail selon la revendication 1, **caractérisé en ce que** le conduit d'air comprimé (9) comporte plusieurs embouchures de prélèvement (14), qui peuvent chacune être reliées à des conduites d'air comprimé supplémentaires.

3. Module d'alimentation sur un lieu de travail selon l'une des revendications précédentes, **caractérisé en ce que** chacune des embouchures de prélèvement (14) est équipée d'un clapet de retenue (18).

4. Module d'alimentation sur un lieu de travail selon l'une des revendications précédentes, **caractérisé en ce que** les conduites d'alimentation (3, 8) côtoient des conduites électriques (8).

5. Module d'alimentation sur un lieu de travail selon l'une des revendications précédentes, **caractérisé en ce que** les conduites d'alimentation (3, 8) côtoient des conduites d'alimentation de liquide.

6. Module d'alimentation sur un lieu de travail selon l'une des revendications précédentes, **caractérisé en ce que** les conduites d'alimentation (3, 8) côtoient des conduites d'alimentation en gaz.

7. Module d'alimentation sur un lieu de travail selon l'une des revendications précédentes, **caractérisé en ce que** le chariot (2) comporte un manomètre à air comprimé.

8. Module d'alimentation sur un lieu de travail selon l'une des revendications précédentes, **caractérisé en ce qu'**un débitmètre est prévu sur le chariot (2) ou sur les embranchements de prélèvement (14).

9. Module d'alimentation sur un lieu de travail selon l'une des revendications précédentes, **caractérisé en ce que** le rail (1) comporte des dispositifs de fixation (11) sur sa face supérieure (10) pour le montage du rail (1).

10. Module d'alimentation sur un lieu de travail selon l'une des revendications précédentes, **caractérisé en ce que** le rail (1) comporte un profil ouvert sensiblement en forme de C et situé en dessous de la face inférieure (12) du rail (1), et **en ce que** le chariot (2) comporte au moins un mécanisme de roulement (13), lequel roule sur la face inférieure (12), à l'intérieur du rail (1) et auquel est suspendu le chariot (2).

11. Dispositif d'alimentation sur un lieu de travail composé de plusieurs modules d'alimentation sur un lieu de travail (A, B, C) selon l'une des revendications précédentes, **caractérisé en ce que** les modules (A, B, C) sont disposés l'un à la suite de l'autre afin de former un conduit d'air comprimé (9) continu et unique.
